# FASCICULE DE BREVET EUROPEEN

(11) **EP 1 177 155 B1**
(45) Date de publication et mention de la délivrance du brevet: **26.03.2003**
(21) Numéro de dépôt: 00925412.9
(22) Date de dépôt: 05.05.2000
(51) Int. Cl.: C03B 21/02, C03B 21/06, C03B 18/06

(54) **PROCEDE DE FABRICATION DE VERRE FLOTTE, DISPOSITIF DE MISE EN OEUVRE ET PRODUITS OBTENUS**
VERFAHREN ZUR HERSTELLUNG VON FLOATGLASS, VORRICHTUNG ZUR HERSTELLUNG UND HERGESTELLTES PRODUKT
METHOD FOR MAKING FLOAT GLASS, IMPLEMENTING DEVICE AND RESULTING PRODUCTS

(30) Priorité: 07.05.1999 FR 9905877
(43) Date de publication de la demande: 06.02.2002
(73) Titulaire: SAINT-GOBAIN GLASS FRANCE, 92400 Courbevoie (FR)
(72) Inventeur: QUENTIN, Christophe, F-95600 Eaubonne (FR); BELLETTRE, Michel, F-60500 Chantilly (FR); GERMAR, Robert, F-75019 Paris (FR)
(74) Mandataire: Goldenberg, Virginie Isabelle
(86) Numéro de dépôt international: FR0001237
(87) Numéro de publication internationale: WO00068156

(56) Documents cités:
- EP-A- 0 270 897
- EP-A- 0 321 838
- US-A- 3 754 884
- US-A- 3 885 943
- US-A- 3 930 825

## Description

La présente invention concerne un procédé de fabrication de verre flotté (ou procédé de fabrication de verre plat par la technique de flottage ou procédé float), ce procédé permettant de fabriquer des feuilles de verre destinées notamment à la réalisation de vitrages. La présente invention concerne également un dispositif de mise en oeuvre du procédé ainsi que les produits obtenus.

La fabrication de verre en feuille par flottage se fait de façon connue en déversant du verre fondu sur un support liquide (ou « bain ») plus dense que le verre (par exemple un bain d'étain) et en faisant avancer sur la surface du bain le ruban de verre qui se forme avant de découper en feuilles ledit ruban figé par refroidissement. Dans l'installation de flottage (ou « float »), le verre arrive en fusion à une viscosité de l'ordre de 10^{3,4} Poises pour s'écouler sur le bain, la température en tête de ce bain étant généralement de l'ordre de 1000-1400°C (selon le verre utilisé), et s'étale pour trouver son épaisseur d'équilibre. Le formage du verre, c'est-à-dire l'opération visant à donner une épaisseur voulue au ruban de verre (par exemple par étirage latéral et longitudinal, le formage incluant également, le cas échéant, la striction intervenant après les éléments d'étirage latéral), est ensuite opéré lorsque le verre atteint une viscosité supérieure à 10^{3.7} ou 10⁴ Poises (à des températures généralement inférieures à 1150°C environ, la force visqueuse étant trop faible à des températures supérieures) et avant que le verre sorte du bain entraîné par des rouleaux extracteurs en aval du bain et se fige (le verre étant figé à une viscosité de l'ordre de 10¹³ Poises au niveau des rouleaux extracteurs, la viscosité du verre en sortie de float étant par ailleurs généralement supérieure à 10¹⁰ Poises) et/ou avant que le verre soit, le cas échéant, recuit.

Dans un procédé courant, l'étirage latéral du ruban de verre sur la surface du bain est opéré en l'agrippant latéralement par des molettes (ou « top-rolls ») positionnées le long du bain de part et d'autre du ruban de verre. Les installations utilisant ce procédé sont généralement des installations à fort débit (jusqu'à quelques centaines de tonnes de verre par jour) et sont adaptées à la production de feuilles de verre de plusieurs millimètres d'épaisseur. En revanche, la fabrication de feuilles de verre de faible épaisseur (inférieure à 3 mm) par ce procédé pose des problèmes soit en termes de rendement dans les grosses installations, soit en termes de planéité et de qualité optique du verre dans les petites installations.

Suivant un autre procédé ayant fait l'objet du brevet FR-A-1 378 839 et de ses additions numéros 86.221, 86.222, 86.817, 87.798 et 91.543, du brevet FR-B-2 123 096 et du brevet FR-B-2 150 249, on utilise des éléments mobiles de guidage, continus et souples (par exemple des fils de métal) qui adhèrent au verre sur les bords latéraux du ruban et accompagnent ledit ruban dans son mouvement sur le bain. Pour des faibles épaisseurs, ce procédé ne permet pas non plus d'obtenir systématiquement une qualité satisfaisante, en particulier dans les petites installations, les feuilles de verre obtenues ne présentant pas toujours une épaisseur constante et/ou une planéité satisfaisante.

La présente invention a pour objet de fournir un procédé de fabrication de verre flotté ne présentant pas les inconvénients précédemment cités, en particulier permettant d'améliorer la planéité du verre flotté en très faible épaisseur et pour les petites installations (c'est-à-dire des installations dont les dimensions ne dépassent pas généralement 20 m de long et 4 m de large et produisant moins de 20 tonnes par jour de verre plat, les grandes installations étant plus volumineuses et pouvant produire jusqu'à plusieurs centaines de tonnes de verre plat par jour). La présente invention propose ainsi un procédé de fabrication de verre flotté adapté à la fabrication de feuilles de verre minces par flottage et permettant d'obtenir des feuilles de verre minces présentant notamment une bonne planéité, une qualité optique satisfaisante et une épaisseur constante, ce procédé évitant toute déformation de la feuille pendant le formage et permettant également de recuire le ruban mince sans créer de contraintes de forme résiduelles qui risquent également de dégrader la planéité de la feuille.

Dans le procédé selon l'invention, on déverse du verre fondu sur un support liquide plus dense que le verre, notamment un bain métallique (par exemple de l'étain fondu ou un alliage d'étain), puis on fait avancer vers l'aval le ruban continu qui se forme, ce procédé étant caractérisé par le fait qu'on découpe en continu les bords en surépaisseur du ruban dans la zone de formage.

Par « bords en surépaisseur du ruban », on entend dans la plupart des cas les bords latéraux du ruban présentant une épaisseur sensiblement plus importante que celle de la partie centrale du ruban, en particulier une épaisseur au moins deux fois plus importante que celle du milieu du ruban. De façon plus générale selon la présente invention, cette expression couvre aussi les bords présentant une épaisseur sensiblement plus faible que celle de la partie centrale du ruban telle qu'une épaisseur au moins deux fois plus faible que celle du milieu du ruban.

Ces bords en surépaisseur occupent généralement entre 4 et 30 % de la largeur du ruban. Ils sont liés au procédé de flottage et apparaissent pendant le formage, la surépaisseur pouvant être plus ou moins importante selon le procédé employé et le type de produit que l'on cherche à obtenir. Dans le cas d'un ruban de verre présentant une épaisseur de l'ordre de un millimètre ou moins au centre, ces bords en surépaisseur peuvent notamment atteindre une épaisseur de l'ordre de 7 millimètres. Le découpage de ces bords présentant une épaisseur et donc une température et une rigidité différentes de celles du centre du ruban permet de limiter la déformation du ruban sous l'effet de forces transversales et permet également d'éviter l'apparition de contraintes de forme résiduelles dans le ruban, ces contraintes résiduelles risquant de dégrader la planéité de la feuille lors de sa recuisson dans l'étenderie après le bain ou risquant d'entraîner une fragilisation des feuilles et leur casse. Au lieu d'obtenir des différences d'épaisseur de quelques millimètres d'un bord à l'autre du ruban, on obtient ainsi des différences de l'ordre de quelques centièmes de millimètres. Ce découpage est particulièrement important pour les petits floats ou pour la fabrication de feuilles de faible épaisseur où la planéité est essentielle. II permet également, le cas échéant, de limiter les phénomènes de striction observés après les éléments d'étirage latéraux et permet de réduire les moyens de chauffage au sortir du bain, le chauffage du ruban se faisant de façon plus homogène et rapide.

Il ne faut pas confondre le découpage mentionné dans la définition de l'invention avec le découpage déjà connu intervenant après la zone de formage. Ce dernier découpage, intervenant sur le verre suffisamment figé pour pouvoir être manipulé et/ou sur le verre recuit, a pour but de donner ses dimensions et sa forme définitive au produit et consiste à découper le ruban de verre en feuilles ou à découper une forme particulière dans le ruban ou les feuilles. Ce genre de découpage de forme n'a bien évidemment rien à voir avec le découpage selon la présente invention qui se situe bien plus en amont et constitue une sorte de pré-découpage n'ayant pas pour fonction de se substituer au découpage de forme, mais remplissant au contraire une fonction bien particulière non obtenue par le découpage de forme en aval. Le découpage mentionné dans la définition de l'invention n'exclut d'ailleurs pas le découpage de forme (ni ne dispense de ce découpage) effectué après le bain, ce dernier découpage pouvant toujours avoir lieu le cas échéant pour donner ses dimensions et sa forme finales au produit.

Le découpage selon l'invention se fait donc pendant le formage, dans la zone de formage ou zone de travail (appelée aussi « zone 2 ») correspondant à la zone où l'on peut travailler le produit pour lui donner son épaisseur définitive, le ruban présentant alors généralement une viscosité comprise entre 10⁴ et 10¹⁰ Poises, et de préférence comprise entre 10⁴ et 10^{7.6} Poises. La température du ruban dans la zone de formage est habituellement comprise entre le point appelé point de travail et le point de Littleton, c'est-à-dire généralement entre 650°C (ou 700-740°C selon les verres) et 1150°C. En d'autres termes, le découpage selon l'invention se fait, de préférence et avantageusement selon la présente invention, à une température supérieure au point de Littleton du verre utilisé dans le float.

Pratiquement et préférentiellement, les bords sont découpés entre le moment (ou l'endroit) où le ruban de verre atteint sa largeur maximale dans le float (c'est-à-dire au niveau des derniers éléments d'étirage latéral avant la striction éventuelle) et le moment (ou l'endroit) où le ruban de verre est décollé du bain (c'est-à-dire généralement le moment où il commence à monter sur des rouleaux extracteurs (LOR) placés en sortie de bain, l'endroit étant également appelé wash-line). De préférence et dans la plupart des cas, ils sont découpés juste après que le ruban a atteint sa largeur maximale dans le float. En particulier, le découpage des bords du ruban s'opère généralement à une température du ruban de l'ordre de 900 à 1100°C, en pleine zone de formage, ou encore dans une zone où le verre présente une viscosité comprise entre 10⁴ et 10^{5.5} Poises, bien au-delà du point de ramollissement du verre, la séparation des bords de la feuille se faisant d'autant mieux que le verre est à une température bien supérieure à sa température de ramollissement, le découpage du verre à une température proche de son point de ramollissement risquant de former des vagues dans le ruban. Le découpage des bords se fait ainsi à chaud, dans le verre encore liquide et sans création de contraintes. Les bords sont découpés en continu, le découpage se faisant en chacun des côtés du ruban à quelques centimètres (par exemple 5 - 6 cm) de la lisière du ruban, les bords découpés formant des bandes continues.

Le découpage est généralement physique ou mécanique, en particulier il est effectué avantageusement à l'aide d'au moins un laser et/ou d'au moins un couteau chauffant.

Dans le cas du laser. on utilise avantageusement un laser (tel qu'un laser CO₂) émettant dans l'infrarouge, à une longueur d'onde où le verre est opaque et par conséquent absorbe un maximum de lumière. De façon plus générale, le laser doit présenter des caractéristiques (telles que la longueur d'onde et la puissance ou l'intensité) telles que le verre puisse absorber l'énergie du faisceau laser qu'il reçoit et puisse le convertir en chaleur suffisante pour être chassé au point d'impact, en particulier à l'état liquide ou de vapeurs. La puissance du laser peut être par exemple de l'ordre de 200 à 500 W, l'efficacité augmentant généralement avec la puissance. De même, l'efficacité augmente lorsque la vitesse du ruban diminue. On peut ainsi porter localement le verre à des températures supérieures à 3000°C pour des vitesses du ruban de l'ordre par exemple de 0,5 à 1,5 m.min⁻¹.

En général, le faisceau laser, émis par un dispositif approprié situé hors du float, est dirigé vers le point d'impact dans le float par un système de lentilles, de miroirs et de fenêtres au travers d'une canne optique pénétrant dans l'enceinte du float (par exemple par une ouverture latérale du float). Avantageusement, la partie optique est installée dans un bras intérieur qui peut facilement être enlevé tout en laissant la canne extérieure dans le float, et la canne est refroidie, par exemple par circulation d'eau. Les parties recevant le faisceau laser de la canne optique doivent permettre une bonne transmissibilité de la lumière infra rouge et si nécessaire peuvent être nettoyées, par exemple à l'azote, par une ou plusieurs buses (en particulier pour la fenêtre de sortie du faisceau située dans le float).

De préférence on utilise au moins deux lasers tel que décrits précédemment, les lasers étant placés de part et d'autre du ruban. Chaque faisceau est introduit respectivement par chaque canne dans une ouverture sur le côté du float et est dévié de façon à arriver perpendiculairement au ruban de verre à l'endroit de découpe. Le découpage se fait dans le ruban en mouvement, les lasers restant avantageusement immobiles.

Dans le cas du couteau, on utilise avantageusement un couteau constitué d'un ou plusieurs matériaux qui peuvent être chauffés par effet joule et qui résistent en même temps au bain métallique et au verre. Le couteau est par exemple en graphite, en molybdène, en tungstène, en nitrure d'aluminium dopé, en Si₃N₄ dopé, par exemple par TiN, en SiC/AlN/MoSi₂, etc. De préférence, un matériau convient s'il tient au moins 40 heures dans le bain float. Le couteau chauffant se présente par exemple sous la forme d'une pièce angulaire ou coudée (par exemple sous la forme d'un U), dans laquelle on fait circuler du courant afin de chauffer un point ou la partie du coude ou de l'angle devant entailler le verre, cette pièce présentant éventuellement une ou des parties plus froides ou refroidies. La pointe du couteau est chauffée à haute température, notamment à des températures pouvant aller jusqu'à 1400°C-1500°C environ (voire supérieures à 1500°C), la température du couteau devant dépasser la température du verre d'au moins 300°C. Le couteau est préférentiellement mince, par exemple d'épaisseur inférieure à 2 mm (en particulier là où sa section est la plus faible), pour éviter la création de phénomènes d'instabilité comme par exemple des vagues dans le verre. De même, la vitesse du ruban. lors de l'utilisation d'un couteau est préférentiellement faible (notamment inférieure à 10 m.min⁻¹) afin d'éviter la formation de vagues. Le courant passe dans la partie inférieure du couteau où s'établit le point chaud à la section minimale. Le couteau est placé dans le ruban de verre et est alimenté par une canne qui le porte également. Le découpage se fait dans le ruban en mouvement, le couteau restant avantageusement immobile.

De préférence, on utilise deux couteaux tels que décrits précédemment, par exemple deux couteaux en tungstène, les couteaux étant placés de part et d'autre du ruban.

Bien entendu, il est possible de combiner le découpage par couteau avec le découpage par laser, le couteau étant alors placé préférentiellement juste derrière le laser dans la fente créée par ce dernier.

Selon un mode de réalisation de l'invention (en particulier dans le cas de l'utilisation d'un laser), on peut diriger un jet de gaz vers l'endroit du découpage en même temps que l'on effectue le découpage. Ce jet de gaz peut aider à chasser, le cas échéant, la matière chauffée et/ou vaporisée par l'instrument de découpage, hors de la trace de découpe, et peut permettre de refroidir les surfaces créées pour empêcher le recollage des bords. En général la matière est chassée vers le haut soit en direction amont soit en direction aval du float. De préférence dans le cas du laser, le jet de gaz est dirigé vers le point d'impact du laser sur le verre ou très près de ce point d'impact, tandis que dans le cas du couteau, le jet peut être dirigé dans la fente légèrement en aval du point de contact du couteau et du verre. Le jet de gaz peut être transversal au mouvement du verre, ou dans le sens du mouvement du ruban de verre (notamment lorsque la buse est placée en amont de l'impact) ou dans le sens opposé. Le débit du jet peut être par exemple de l'ordre de 2 à 19 l/min. Ce jet peut avantageusement être amené par un tube à l'intérieur de la canne utilisée pour l'alimentation du dispositif de découpage. Ainsi, lorsque la canne est refroidie, le gaz reste froid. Le gaz utilisé peut être par exemple de l'azote.

Avantageusement, on peut également (notamment dans le cas de l'utilisation d'un laser) soulever la feuille à l'endroit du découpage à l'aide d'au moins une pièce généralement inclinée désignée ci-après par « sabot », par exemple un sabot en graphite, afin d'interrompre le contact verre-bain métallique et faciliter le découpage. Le soulèvement, en créant un espace entre la feuille et le bain métallique, peut également permettre que le verre vaporisé ou liquide soit chassé vers le bas et permettre une meilleure séparation des bords en créant un cisaillement local. Eventuellement, le découpage peut être fait à l'endroit où le ruban commence à se décoller du bain en sortie de float afin d'utiliser ce soulèvement déjà existant plutôt que de mettre en place un ou des sabots. Le ou les sabots sont de préférence refroidis à l'eau afin de ne pas coller au verre et sont avantageusement placés en aval du point d'impact du dispositif de découpage, près de ce point (par exemple à 5 mm du point d'impact) pour que la coupe se fasse quand le ruban commence à se soulever.

Dans un mode de réalisation de la présente invention, le ruban de verre est étiré latéralement sur la surface du bain, dans la zone de formage, en l'agrippant latéralement par des molettes (généralement en acier) positionnées le long du bain de part et d'autre du ruban de verre. Dans ce cas, le ou les appareils de découpage sont préférentiellement placés après la dernière molette. Les molettes agissent en général à une viscosité comprise entre 10^{4.5} et 10^{5.5} et tiennent le ruban à une largeur imposée. Ensemble avec l'étirage longitudinal imposé par les rouleaux extracteurs en sortie de float, le ruban est étiré à une largeur et épaisseur bien déterminées.

Dans un mode de réalisation préféré de la présente invention, on étire latéralement le ruban de verre sur la surface du bain, dans la zone de formage, et on l'accompagne dans son mouvement à l'aide d'éléments de guidage continus et souples faits d'un matériau solide susceptible d'adhérer au verre fondu, ces éléments étant mis au contact des bordures latérales du ruban juste derrière la lèvre de coulée et écartant ensuite le ruban à l'aide de deux doigts écarteurs placés dans une zone où le verre présente une viscosité comprise entre 5000 et 50000 Poises, ces doigts écarteurs obligeant les éléments de guidage à diverger pour opérer l'étirage transversal progressif du ruban jusqu'à sa largeur et son épaisseur définitives, l'écartement entre les éléments de guidage étant ensuite maintenu jusqu'au refroidissement du verre. Dans ce mode de réalisation, le ou les appareils de découpage sont préférentiellement placés juste après les doigts écarteurs, près des doigts écarteurs.

De façon générale, quel que soit le mode de réalisation, les bords sont préférentiellement découpés au niveau des derniers éléments d'étirage latéral, en particulier juste après, le dispositif de découpage (tel que laser(s) et/ou couteau(x)) étant alors placé après la dernière intervention des éléments d'étirage latéral (top roll ou doigt écarteurs).

De façon générale également, la vitesse du ruban dans le float est maintenue inférieure à 15 m.min⁻¹, de préférence inférieure à 10 m.min⁻¹, de façon particulièrement préférée inférieure à 5 m.min⁻¹, et peut descendre par exemple à 150 mm.min-1 (la vitesse d'avancement du ruban peut être par exemple de l'ordre de 250-300 mm.min-1, pour une épaisseur finale de feuille de l'ordre de 1 mm). Par « épaisseur finale » du ruban on entend l'épaisseur (moyenne) du ruban après détachement des éléments de guidage ou encore l'épaisseur du ruban figé par refroidissement, cette épaisseur pouvant descendre en dessous de 0,4 mm.

Dans le mode de réalisation utilisant des éléments de guidage continus et souples, le produit (P) de la valeur (v) de la vitesse du ruban (mesurée au sortir du bain) et de la valeur (e) de son épaisseur finale est généralement inférieure à 2,5.10⁻³m².s⁻¹, voire 2.5.10⁻⁴m².s⁻¹ ou 1.10⁻⁴m².s⁻¹ (en pratique, il peut descendre à 1.10⁻⁵m².s⁻¹ ou encore moins).

Les éléments de guidage et les doigts écarteurs (ou pièces de retenue) cités précédemment sont notamment décrits dans le brevet FR-A-1 378 839 et ses additions, dans le brevet FR-B-2 123 096, dans le brevet FR-B-2 150 249 et dans le brevet FR-B-2747119 auxquels on se référera pour plus d'informations sur ces éléments de guidage et leurs avantages. Les éléments de guidage selon l'invention peuvent être par exemple des fils métalliques de type courant, notamment des fils en acier inoxydable (tels que des fils en acier doux recuit blanc ou recuit noirci) ou en alliage réfractaire, présentant, par exemple, un diamètre de 1 à 2 mm environ.

Ces éléments de guidage sont généralement tendus entre des dispositifs tels que des dévidoirs situés en amont et en aval du bain et sont placés au contact du ruban de verre par l'intermédiaire de pièces d'appui ou « pastilles » (sous forme de galets presseurs, rouleaux, barrettes, etc.) ou de conduits d'introduction également décrits dans les brevets précédemment cités. Les pièces d'appui et les doigts écarteurs sont réalisés de manière à résister à l'usure due au frottement des éléments de guidage et à la corrosion par le verre en fusion, et peuvent éventuellement être chauffés. Les éléments de guidage sont laissés dans les bords du verre ou peuvent être détachés du verre lorsque celui-ci est parvenu à un stade du procédé où son refroidissement lui confère une rigidité suffisante. Dans le cas où les fils restent insérés dans les bords après les doigts écarteurs, on peut également s'en servir pour écarter les bords après découpage.

Dans le mode de réalisation utilisant les éléments de guidage, l'angle de divergence (c'est-à-dire l'angle mesuré entre l'axe du ruban et la droite passant entre une pièce d'appui et la pièce de retenue la plus proche se trouvant du même côté du ruban) est préférentiellement choisi inférieur, en valeur absolue, à 25° et, de préférence, inférieur à 20° afin de contribuer à l'amélioration de la qualité et de la planéité des feuilles de verre obtenues, un angle supérieur pouvant provoquer un étirage trop brutal du ruban de verre.

Le mode de réalisation utilisant les éléments de guidage est plus économique et plus facile à mettre en ouvre que le procédé utilisant des molettes dans le cadre de la présente invention. Le soulèvement à l'aide du ou des sabots évoqués précédemment est notamment rendu plus simple et sûr que dans le mode de réalisation utilisant des molettes.

A la sortie du bain, quel que soit le mode de réalisation, le ruban ayant atteint une rigidité suffisante peut être retiré du bain par des moyens mécaniques sans subir de dommages susceptibles d'affecter sa planéité et son poli de surface. Il peut être ou avoir été recuit (par exemple dans une arche de recuisson ou étenderie) et/ou soumis à d'autres traitements. Il peut être ensuite découpé (éventuellement par laser) en feuilles et/ou le ruban ou les feuilles peuvent être découpés aux dimensions requises. Avant le découpage de forme final, le produit présente généralement une structure particulière en ce que les bords latéraux restant après découpage à chaud des bords en surépaisseur présentent un léger arrondi ou un petit bourrelet peu épais (ce bourrelet présentant par exemple quelques dizaines de microns de plus d'épaisseur que l'épaisseur centrale du ruban) et éventuellement une légère nervure avant l'arrondi.

De façon nouvelle et avantageuse, le ruban peut également être enroulé en ligne (lorsque son épaisseur n'excède pas 500 ou 700 µm, de telles épaisseurs pouvant être atteintes par le procédé selon l'invention comme explicité ci-après), ceci n'étant jusqu'à présent pas possible en la présence des bords en surépaisseur.

La présente invention concerne ainsi également les rouleaux de verre pelliculaire (verre d'épaisseur inférieure à 0,7 mm, de préférence inférieure à 0,4 mm) conçus dans la présente invention et pouvant être obtenus par ce mode de réalisation préféré du procédé selon l'invention. Ces rouleaux présentent des avantages notamment en terme de manipulation et de transport, en plus des avantages liés au verre pelliculaire. De préférence, pour éviter des problèmes de fatigue, d'endommagement et de réalisation, de tels rouleaux selon l'invention présentent un rapport du rayon (intérieur) de l'enroulement sur l'épaisseur du verre (valeurs exprimées en unités du système international) supérieur à 1000, de préférence supérieur à 2500 ou 3500, voire éventuellement supérieur à 10000. Pour éviter également des problèmes d'endommagement, des intercalaires appropriés peuvent être disposés entre les spires de l'enroulement.

Selon un mode avantageux de réalisation de l'invention, on peut effectuer une trempe du ruban, en particulier les bords du ruban éventuellement fragilisés par le découpage peuvent être trempés chimiquement, soit en ligne (par exemple avant découpage des feuilles aux dimensions requises ou avant enroulement), soit après enroulement du ruban. L'avantage d'effectuer la trempe au niveau du rouleau ou enroulement de verre selon l'invention est notamment que la trempe peut se faire plus facilement que sur le ruban en ligne et sur une grande longueur de ruban de verre à la fois. Les bords du ruban sont par exemple trempés en plongeant les parties latérales de l'enroulement dans un bain approprié (par exemple dans un bassin de sel fondu tel que du potassium) pendant la durée nécessaire pour effectuer la trempe (et la cicatrisation éventuelle) de ces parties (cette durée étant par exemple de l'ordre d'une journée ou plus).

Comme précédemment évoqué, l'invention s'applique particulièrement bien à la fabrication de feuilles de verre minces, présentant par exemple une épaisseur inférieure à 2,5 mm, et en particulier une épaisseur inférieure à 0,7 ou 0,4 mm (films pelliculaires). Les applications du verre pelliculaire obtenu selon l'invention et présenté éventuellement sous forme de rouleaux sont nombreuses ; notamment, le verre pelliculaire selon l'invention peut être utilisé comme protection (protection alimentaire, contre les rayures, protection électrique, protection pour assurer l'imperméabilité aux gaz et aux liquides, aux produits chimiques...), comme décor (après traitement tel que sérigraphie, pulvérisation... pour déposer des couches telles que miroir. émail...), le verre étant dans ce cas appliqué par exemple en déroulant un rouleau selon l'invention contre une surface que l'on veut décorer, comme porteur ou promoteur de fonction (optique, chimique, promoteur d'adhésion, anti-salissure ou graffitis, anti-pluie, anti-bactérie...), comme identificateur ou sceau (par exemple comme filigrane incorporé dans des billets et revêtu d'une couche permettant l'identification du billet, ou comme sceau incorporé dans une bouteille et se fracturant à l'ouverture pour authentifier le contenu d'origine de la bouteille, ou comme intercalaire présent dans une carte et rendant celle-ci infalsifiable, la falsification de la carte entraînant le bris du verre, etc.), comme emballage, support pour données optiques, magnétiques, écran, etc.

Dans le procédé selon l'invention, on peut fabriquer avantageusement du verre plat à partir de toutes les compositions habituellement utilisées dans les procédés de flottage (verres silico-sodo-calciques traditionnels). Dans le mode de réalisation utilisant des éléments de guidage, il est également possible d'utiliser des verres présentant un palier de travail (différence entre la température du verre à une viscosité de 1000 Poises et la température du verre à une viscosité de 10⁶ Poises) plus court, notamment inférieur à 350°C, en particulier inférieur à 300°C, le procédé dans ce mode de réalisation permettant de former plus rapidement le verre à son épaisseur finale.

Des verres pouvant être utilisés avec avantage dans le procédé selon l'invention sont par exemple les verres décrits dans les brevets et demandes de brevet EP-A-526 272, EP-A-576 362, FR-B-2 727 399, FR-B-2 725 713, FR-B-2 725 714, WO-A-96/11888 et WO-A-96/11887.

Les produits obtenus selon le procédé de l'invention présentent une bonne planéité (la flèche sur une longueur de l'ordre de 50 cm n'excédant pas généralement 100 µm) et une épaisseur relativement constante. La qualité optique des verres obtenus est également au moins égale voire supérieure à celle des verres obtenus selon les procédés courants. Comme indiqué précédemment, la striction du ruban de verre est très faible et n'entraîne pas de défauts optiques. Le ruban obtenu ne présente pas non plus de difficultés de recuisson. Le procédé selon l'invention est également économique et particulièrement performant et rentable.

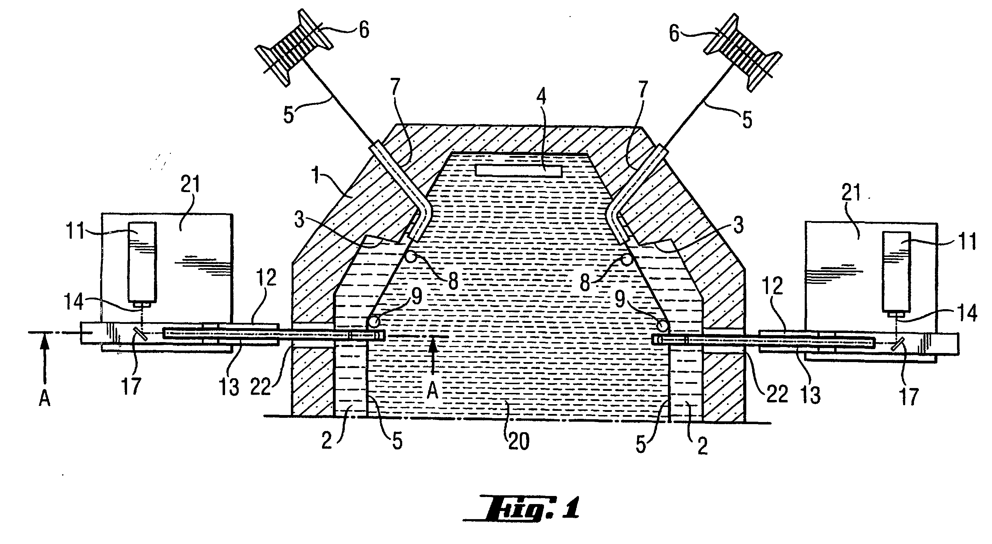

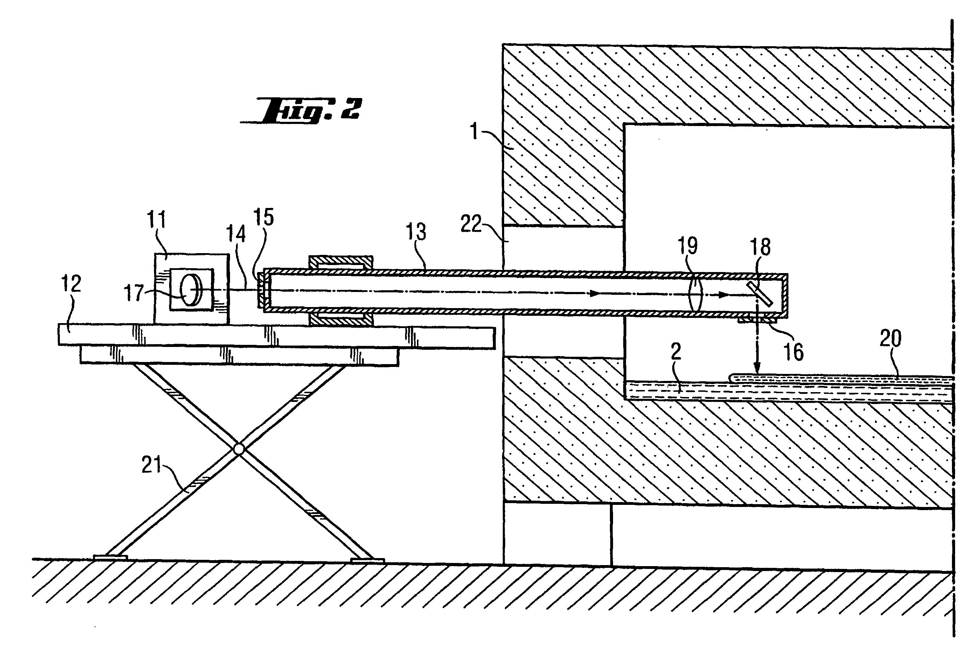

La présente invention concerne également une installation de fabrication par flottage de feuilles de verre selon la revendicaton 10 (four de flottage ou float) propre à mettre en oeuvre le procédé selon l'invention, ce dispositif comprenant au moins un dispositif de découpage (par exemple laser(s) et/ou couteau(x)) préférentiellement placé après la dernière intervention des éléments d'étirage latéraux (top roll ou doigt écarteurs). Les dispositifs selon l'invention déjà explicités en grande partie dans l'exposé précédent de l'invention sont également illustrés ci-après, au travers d'un exemple non limitatif en référence aux figures 1 et 2 annexées qui représentent :
- Figure 1 : une vue schématique partielle de dessus d'une installation suivant l'invention.
- Figure 2 : une coupe schématique partielle suivant la ligne A-A de l'installation de la figure 1.

Les dispositifs selon l'invention sont préférentiellement des installations de faible débit (moins de 20 t/j) et de faible longueur.

L'installation comporte généralement un bassin dont une partie de l'enceinte est représentée en 1, ce bassin contenant un bain métallique 2 tel que par exemple un bain d'étain. La partie amont de ce bassin peut comporter des rives divergentes ou « restrictors » 3 dans le sens d'avancement du verre. Les moyens de chauffage du bassin ne sont pas représentés.

Le verre fondu est amené à l'extrémité amont du bassin dans la zone figurée en 4. Le verre ainsi déversé s'étale sur le bain entre les rives divergentes sous l'action de la gravité et de la traction exercée en aval. On introduit alors par la face supérieure, dans les bords de la nappe, avant que celle-ci ait quitté les rives divergentes, ou immédiatement après (ou encore au niveau de la lèvre de sortie ou déversoir 4), des fils 5 (les éléments de guidage) provenant par exemple de dévidoirs 6. Chaque fil peut être amené par un conduit ou guide fils 7 qui lui impose éventuellement un changement de direction, cette disposition permettant le cas échéant de situer les dévidoirs latéralement par rapport au four et d'amener le fil dans la position voulue, puis rencontre une pièce d'appui 8 qui le soumet à un effort dirigé vers le bas pour l'insérer dans le verre.

En aval de la zone de nappage se trouvent des doigts écarteurs 9 qui obligent les fils à diverger puis les empêchent de se rapprocher sous l'action de forces de tension superficielles. Les fils prennent appui sur ces doigts écarteurs et maintiennent le ruban 20 (représenté uniquement en figure 2) à la largeur correspondant à l'épaisseur finale à obtenir. Les fils accompagnent le ruban pendant son refroidissement dans la zone aval du bain (non représentée) jusqu'à ce que le ruban soit suffisamment rigide (la température du ruban étant par exemple inférieure à 600°C).

Juste après les doigts écarteurs, les bords en surépaisseur du ruban de verre sont découpés en utilisant des lasers CO₂ 11. Sur chacun des côtés du float, le faisceau laser 14 issu d'un laser CO₂ 11 placé à l'extérieur du float est transmis par l'intermédiaire de miroirs 17, 18, de lentille 19 et de fenêtres 15, 16 au travers d'une canne optique 13 pénétrant par une ouverture latérale 22 (side-sealing) du float. La canne optique est refroidie et est posée sur un banc optique 12, l'ensemble étant placé sur une table élévatrice 21 pour régler la position du système de découpage.

Le procédé selon l'invention permet de fabriquer des feuilles de verre minces utilisables notamment dans le domaine de l'automobile, de l'électronique, des écrans plasma, des disques durs magnétiques, etc.

## Revendications

1. Procédé de fabrication par flottage de feuilles de verre selon lequel on déverse du verre fondu sur un support liquide (2) plus dense que le verre, puis on fait avancer vers l'aval le ruban continu (20) qui se forme, **caractérisé en ce qu'**on découpe en continu, dans la zone de formage, les bords du ruban présentant une épaisseur sensiblement plus importante ou sensiblement plus faible que celle de la partie centrale du ruban.

2. Procédé selon la revendication 1, **caractérisé en ce que** les bords sont découpés entre le moment où le ruban de verre (20) atteint sa largeur maximale dans le float et le moment où le ruban de verre est décollé du bain (2).

3. Procédé selon l'une des revendications 1 à 2, **caractérisé en ce** le découpage est effectué à l'aide d'au moins un laser (11) et/ou d'au moins un couteau chauffant.

4. Procédé selon l'une des revendications 1 à 3, **caractérisé en ce que** l'on dirige un jet de gaz vers l'endroit du découpage en même temps que l'on effectue le découpage.

5. Procédé selon l'une des revendications 1 à 4, **caractérisé en ce** l'on soulève la feuille (20) à l'endroit du découpage afin d'interrompre le contact verre-bain métallique (2) et faciliter le découpage.

6. Procédé selon l'une des revendications 1 à 5, **caractérisé en ce que** l'on étire latéralement le ruban de verre (20) sur la surface du bain (2), dans la zone de formage, et on l'accompagne dans son mouvement à l'aide d'éléments de guidage (5) continus et souples faits d'un matériau solide susceptible d'adhérer au verre fondu, ces éléments écartant le ruban à l'aide de deux doigts écarteurs (9), le ou les appareils de découpage (11) étant placés juste après les doigts écarteurs (9).

7. Procédé selon l'une des revendications 1 à 6, **caractérisé en ce que** la vitesse du ruban (20) dans le float est maintenue inférieure à 10 m.min⁻¹

8. Procédé selon l'une des revendications 1 à 7, **caractérisé en ce que** le ruban est enroulé en ligne.

9. Procédé selon l'une des revendications 1 à 8, **caractérisé en ce que** les bords du ruban sont trempés chimiquement, en ligne ou après enroulement du ruban.

10. Installation de fabrication par flottage de feuilles de verre, convenant à la mise en oeuvre du procédé selon les revendications 1 à 9, comprenant au moins un support liquide (2) et **caractérisée en ce qu'**elle comprend au moins un dispositif de découpage (11) placé dans la zone de formage pour le découpage de chaque bord du ruban présentant une épaisseur sensiblement plus importante ou sensiblement plus faible que celle de la partie centrale du ruban.

11. Installation selon la revendication 10, **caractérisée en ce qu'**elle présente des dimensions ne dépassant pas 20 m de long et 4 m de large et produit moins de 20 tonnes par jour de verre plat

12. Application du procédé selon l'une des revendications 1 à 9 à la fabrication de feuilles de verre d'épaisseur inférieure à 2 mm, en particulier de feuilles de verre pelliculaire.

13. Rouleau de verre, obtenu par le procédé selon l'une des revendications 8 et 9, le verre présentant une épaisseur inférieure à 0,7 mm.

14. Rouleau de verre selon la revendication 13, **caractérisé en ce qu'**il présente un rapport de son rayon sur l'épaisseur du verre supérieur à 1000.

15. Rouleau de verre selon l'une des revendications 13 ou 14, **caractérisé en ce qu'**il comprend des intercalaires entre ses spires.

16. Rouleau de verre selon l'une des revendications 13 à 15, **caractérisé en ce que** ses bords sont trempés chimiquement.

## Claims

1. Method of manufacturing sheets of glass by flotation, according to which molten glass is poured onto a liquid support (2) denser than the glass, and then the continuous ribbon (20) which forms is caused to advance downstream, **characterised in that**, in the forming area, the edges of the ribbon having a substantially greater or substantially lesser thickness than that of the central part of the ribbon are cut off continuously.

2. Method according to Claim 1, **characterised in that** the edges are cut between the moment when the glass ribbon (20) reaches its maximum width in the float and the moment when the glass ribbon is detached from the bath (2).

3. Method according to one of Claims 1 to 2, **characterised in that** the cutting is performed by means of at least one laser (11) and/or at least one heated knife.

4. Method according to one of Claims 1 to 3, **characterised in that** a gas jet is directed towards the cutting point at the same time as the cutting is performed.

5. Method according to one of Claims 1 to 4, **characterised in that** the sheet (20) is raised at the cutting point in order to interrupt the contact between glass and metallic bath (2) and facilitate the cutting.

6. Method according to one of Claims 1 to 5, **characterised in that** the glass ribbon (20) is stretched laterally over the surface of the bath (2), in the forming area, and it is accompanied in its movement by means of continuous flexible guidance elements (5) made from a solid material able to adhere to the molten glass, these elements stretching the ribbon by means of two stretching fingers (9), the cutting appliance or appliances (11) being placed just after the stretching fingers (9).

7. Method according to one of Claims 1 to 6, **characterised in that** the speed of the ribbon (20) in the float is kept below 10 m.min⁻¹.

8. Method according to one of Claims 1 to 7, **characterised in that** the ribbon is coiled on the line.

9. Method according to one of Claims 1 to 8, **characterised in that** the edges of the ribbon are toughened chemically, on the line or after coiling of the ribbon.

10. Installation for manufacturing glass sheets by flotation, suitable for the implementation of the method according to Claims 1 to 9, comprising at least one liquid support (2) and **characterised in that** it comprises at least one cutting device (11) placed in the forming area for cutting each edge of the ribbon having a thickness substantially greater or substantially less than that of the central part of the ribbon.

11. Installation according to Claim 10, **characterised in that** it has dimensions which do not exceed 20 m in length and 4 m in width and produces less than 20 tons per day of flat glass.

12. Application of the method according to one of Claims 1 to 9 to the manufacture of sheets of glass with a thickness of less than 2 mm, in particular sheets of film glass.

13. Roll of glass obtained by the method according to one of Claims 8 and 9, the glass having a thickness of less than 0.7 mm.

14. Roll of glass according to Claim 13, **characterised in that** it has a ratio of its radius to the thickness of the glass of more than 1000.

15. Roll of glass according to one of Claims 13 or 14, **characterised in that** it comprises inserts between its turns.

16. Roll of glass according to one of Claims 13 to 15, **characterised in that** its edges are chemically toughened.

## Patentansprüche

1. Verfahren zur Herstellung von Glasscheiben nach dem Floatglasprinzip, gemäß welchem Glasschmelze auf einen flüssigen Träger (2) gegossen wird, der dichter als diese ist, und anschließend das sich bildende ununterbrochene Glasband (20) nach vorn befördert wird, **dadurch gekennzeichnet, dass** die Ränder des Glasbandes, deren Dicke deutlich größer oder kleiner als die des mittleren Teils des Glasbandes ist, in der Formgebungszone kontinuierlich abgeschnitten werden.

2. Verfahren nach Anspruch 1, **dadurch gekennzeichnet, dass** die Ränder zwischen dem Zeitpunkt, zu welchem das Glasband (20) auf dem Floatglasbad die maximale Breite erreicht, und dem Zeitpunkt, zu welchem das Glasband von diesem Metallbad (2) abgelöst wird, abgeschnitten werden.

3. Verfahren nach Anspruch 1 oder 2, **dadurch gekennzeichnet, dass** das Zuschneiden mittels mindestens eines Lasers (11) und/oder mindestens eines beheizten Messers erfolgt.

4. Verfahren nach einem der Ansprüche 1 bis 3, **dadurch gekennzeichnet, dass** zur selben Zeit, in welcher das Zuschneiden durchgeführt wird, ein Gasstrahl auf die Stelle, wo dieses stattfindet, gerichtet wird.

5. Verfahren nach einem der Ansprüche 1 bis 4, **dadurch gekennzeichnet, dass** die Glasscheibe (20) an der Zuschneidestelle angehoben wird, um den Kontakt Glas-Metallbad (2) zu unterbrechen und das Zuschneiden zu erleichtern.

6. Verfahren nach einem der Ansprüche 1 bis 5, **dadurch gekennzeichnet, dass** das Glasband (20) auf der Oberfläche des Metallbads (2) in der Formgebungszone seitlich ausgezogen und bei seiner Bewegung mittels kontinuierlicher Führungselemente (5) begleitet wird, die nachgiebig und aus einem festen Material hergestellt sind, das in der Lage ist, an der Glasschmelze anzuhaften, wobei diese Elemente das Glasband mit Hilfe von zwei Abstandshaltefingern (9) beabstanden und die Zuschneideeinrichtung/en (11) unmittelbar nach den Abstandshaltefingern (9) angordnet ist/sind.

7. Verfahren nach einem der Ansprüche 1 bis 6, **dadurch gekennzeichnet, dass** die Geschwindigkeit des Glasbandes (20) auf dem Metallbad auf unter 10 m·min⁻¹ gehalten wird.

8. Verfahren nach einem der Ansprüche 1 bis 7, **dadurch gekennzeichnet, dass** das Glasband in der Produktionslinie aufgewickelt wird.

9. Verfahren nach einem der Ansprüche 1 bis 8, **dadurch gekennzeichnet, dass** die Ränder des Glasbandes in der Produktionslinie oder nach Aufwickeln des Glasbandes chemisch vorgespannt werden.

10. Vorrichtung zur Herstellung von Glasscheiben gemäß dem Floatglasprinzip, die für die Durchführung des Verfahrens nach den Ansprüchen 1 bis 9 geeignet ist und mindestens einen flüssigen Träger (2) enthält, **dadurch gekennzeichnet, dass** sie mindestens eine Zuschneideeinrichtung (11) umfasst, die in der Formgebungszone für das Zuschneiden der Ränder des Glasbandes, deren Dicke deutlich größer oder kleiner als die des mittleren Teils des Glasbandes ist, angeordnet ist.

11. Vorrichtung nach Anspruch 10, **dadurch gekennzeichnet, dass** sie Abmessungen besitzt, die eine Länge von 20 m und eine Breite von 4 m nicht übersteigen, und welche weniger als 20 Tonnen Flachglas pro Tag produziert.

12. Anwendung des Verfahrens nach einem der Ansprüche 1 bis 9 auf die Herstellung von Glasscheiben mit einer Dicke von unter 2 mm, insbesondere von Folienglasscheiben.

13. Glasrolle, die durch das Verfahren nach Anspruch 8 oder 9 erhalten ist, wobei das Glas eine Dicke von unter 0,7 mm besitzt.

14. Glasrolle nach Anspruch 13, **dadurch gekennzeichnet, dass** ihr Verhältnis von Radius zu Glasdicke größer als 1 000 ist.

15. Glasrolle nach Anspruch 13 oder 14, **dadurch gekennzeichnet, dass** sie zwischen den Wicklungen Zwischenlagen enthält.

16. Glasrolle nach einem der Ansprüche 13 bis 15, **dadurch gekennzeichnet, dass** die Ränder chemisch vorgespannt sind.
